# DEMANDE DE BREVET EUROPEEN

(11) **EP 2 238 827 A1**
(43) Date de publication de la demande: **13.10.2010**
(21) Numéro de dépôt: 10158486.0
(22) Date de dépôt: 30.03.2010
(51) Int. Cl.: A01K 39/06

(54) **Potence de suspension d'embuc distributeur de nourriture pour machine de nourrissage des palmipèdes et machine le comportant**

(30) Priorité: 31.03.2009 FR 0901586
(71) Demandeur: Dussau Distribution Sas, 40320 Pecorade (FR); Dussau, Christian, 40320 Samadet (FR)
(72) Inventeur: Dussau, Christian, 40320, SAMADET (FR)
(74) Mandataire: Ravina, Bernard

(57) **Abrégé**

La potence de suspension d'un embuc de nourrissage de palmipède connecté au segment terminal (30) d'une conduite d'amenée de nourriture, raccordée à une machine distributrice de nourriture apte à distribuer cette nourriture doses par doses, se caractérise essentiellement en ce qu'elle comprend un bras de potence (10), un moyen de solidarisation dudit bras (11) de potence à un élément rigide, un organe de maintien (12) sur ledit bras de potence de la conduite d'amenée (3) de nourriture et un moyen moteur (13) lié au bras de potence apte à déplacer à la commande, l'embuc de nourrissage (2) vers le haut selon une distance prédéterminée et le maintenir en position haute au moins pendant une fraction du temps nécessaire à la distribution d'une ration complète à l'embuc de nourrissage.

## Description

### Domaine technique

La présente invention est du domaine des matériels utilisés pour l'engraissement des palmipèdes tels que canards et oies et concerne plus particulièrement une potence de suspension d'un embuc distributeur de nourriture telle que pâte alimentaire ou grains de céréale et une machine distributrice comportant une telle potence.

### État de la technique antérieure.

On connaît de l'état de la technique des machines de nourrissage des palmipèdes comprenant sur un châssis une réserve de nourriture à distribuer en rations, et une pompe distributrice apte à puiser dans la réserve une ration de nourriture et à distribuer cette dernière à un embuc de distribution prévu pour être intubé dans le jabot de l'animal à nourrir. Habituellement, l'embuc est connecté à la pompe distributrice par une conduite formée de tronçons de conduite rigides raccordés les uns aux autres par des joints tournants. Typiquement, cette conduite rigide est prolongée par un tronçon de conduite terminal auquel est fixé l'embuc de nourrissage. Le tronçon de conduite terminal autorise des mouvements verticaux et latéraux de l'embuc afin d'en faciliter l'introduction dans le jabot de l'animal.

Pour l'opération de nourrissage, l'embuc doit être maintenu en place, pour ce faire l'utilisateur immobilise à la main le bec du palmipède sur la paroi de l'embuc. Il est apparu utile à l'homme de l'art de mécaniser cette opération pour diminuer la pénibilité du travail. Ainsi on connaît du brevet FR 2 732 187 (HOURDEBAIGT) un dispositif de contention à palette, porté par une crosse dont est doté l'embuc, ledit dispositif de contention étant apte à venir en pression sur l'une des mandibules du bec pour immobiliser ce dernier contre l'embuc. Des perfectionnements ont été apportés à ce dispositif. Ainsi le brevet FR 2 917 946 (HOURDEBAIGT) propose d'actionner la palette par un système de force autonome dont l'action est déclenchée à partir d'un signal délivré par un bouton poussoir installé sur la crosse. Ce système de force autonome met en oeuvre essentiellement un ressort calibré lié d'une part à la palette d'immobilisation et d'autre part à un moteur électrique d'actionnement.

Les nouvelles techniques d'élevage des palmipèdes faisant appel notamment à des logements collectifs d'élevage répondant aux futures normes européennes en matière de bien être animal, imposent un nourrissage dit à la verticale en ce sens que pour cette opération l'embuc est positionné verticalement. Le préposé à cette tâche est obligé alors de positionner ses bras à l'horizontale et adopte pendant l'opération de nourrissage, une posture de travail non naturelle qui se révèle inconfortable. Il y a lieu de noter que pendant le nourrissage, le préposé doit contrôler la position de l'embuc afin d'écarter tout risque de blessure de l'animal. Cependant, une position inadéquate de travail augmente fortement le risque de blessure. Par ailleurs elle engendre chez le préposé des fatigues excessives ainsi que des troubles musculo-squelettiques. Les lésions musculaires et articulaires en résultant se révèlent bien souvent handicapantes et entraînent des arrêts de travail plus ou moins prolongés.

De surcroît ces fatigues et handicaps peuvent engendrer des imprécisions et mauvais contrôles gestuels notamment pendant l'introduction de l'embuc dans l'oesophage du palmipède et pendant le nourrissage. Il peut en résulter des blessures graves de l'appareil digestif de l'animal pouvant entraîner la mort de ce dernier.

### Exposé de l'invention

Le but de l'invention est l'apport d'une aide mécanique au nourrissage des palmipèdes en diminuant les efforts physiques que doit produire le préposé pendant cette opération.

À cet effet la potence de suspension d'un embuc de nourrissage de palmipède connecté à une conduite d'amenée de nourriture, raccordée à une machine distributrice de nourriture apte à distribuer cette nourriture doses par doses, se caractérise essentiellement en ce qu'elle comprend un bras de potence, un moyen de solidarisation dudit bras de potence à un élément rigide de ladite machine distributrice, un organe de maintien sur ledit bras de potence de la conduite d'amenée de nourriture et un moyen moteur lié au bras de potence apte à déplacer à la commande l'embuc de nourrissage vers le haut selon une distance prédéterminée et le maintenir en position haute au moins pendant une fraction du temps nécessaire à la distribution d'une ration complète à l'embuc de nourrissage.

Cette disposition permet d'alléger l'effort que doit produire le préposé lors de l'opération de nourrissage et diminue fortement la pénibilité de cette opération. Ainsi, les conditions de travail s'en trouvent grandement améliorées et la précision des gestes préservée, garantissant ainsi la non blessure du palmipède.

Selon une autre caractéristique de l'invention, le moyen de solidarisation forme une articulation selon un axe géométrique horizontal d'articulation AA' et comprend une platine fixée au bras de potence et une bride prévue pour être fixée à la partie rigide, ladite bride étant articulée selon l'axe géométrique horizontal AA' à ladite platine.

Selon des caractéristiques additionnelles, est prévu un moyen d'équilibrage du bras de potence et des éléments que ce dernier porte, et le moyen moteur est apte, à la commande, à déplacer le bras en pivotement autour de l'axe géométrique horizontal AA' selon une valeur angulaire prédéterminée et dans un sens correspondant au déplacement de l'embuc vers le haut.

En raison de ces dispositions, l'embuc, avant activation du moyen moteur, est situé dans l'espace selon une position selon laquelle il peut être aisément saisi par le préposé au nourrissage et manipulé sans effort notamment pendant la phase d'intubation.
Cette disposition diminue encore la pénibilité du travail.

Selon une autre caractéristique de l'invention, le moyen moteur exerce sur le bras un couple d'équilibrage et constitue le moyen d'équilibrage.

En variante, selon une autre caractéristique de l'invention, le moyen d'équilibrage est constitué par un second organe moteur.

Alternativement, selon une autre disposition de l'invention, le bras de suspension comprend une masse d'équilibrage constituant le moyen d'équilibrage précité.
Cette disposition assure l'équilibrage du bras de potence et de l'embuc même en cas de désactivation du moteur.

L'invention est également relative à une machine distributrice de rations alimentaires à des palmipèdes à nourrir, comportant une potence conforme à l'invention.

### Description sommaire des figures et des dessins.

D'autres avantages, buts et caractéristiques de l'invention apparaîtront à la lecture de la description d'une forme préférée de réalisation donnée à titre d'exemple non limitatif en se référant aux dessins annexés en lesquels :
- la figure 1 est une vue de face de la potence selon l'invention monté sur une machine distributrice,
- la figure 2 est une vue de face d'une potence selon une seconde forme de réalisation, installée sur une machine distributrice,
- la figure 3 montre une potence suspendue à un chariot suiveur mobile sur rail,
- la figure 4 montre une conduite formée par des tronçons rigides réunis par des joints tournants auto-blocables,
- la figure 5 montre en coupe un joint tournant dans un état débloqué,
- la figure 6 montre en coupe un joint tournant dans un état bloqué,
- la figure 7 montre un dispositif de contention,
- les figures 8 et 9 montrent un embuc avec partie terminale souple dans un état fermé (fig.8) et dans un état ouvert (fig.9),
- la figure 10 montre une machine distributrice équipée de plusieurs embucs.

### Meilleure manière de réaliser l'invention.

Telle que représentée, la potence 1 selon l'invention, permet la suspension d'un embuc 2 de nourrissage de palmipède lequel est connecté au segment terminal 30 souple d'une conduite 3 d'amenée de nourriture, raccordée à une machine 4 distributrice de nourriture apte à distribuer cette nourriture doses par doses.

Conformément à l'invention, la potence 1 comprend un bras de potence 10, un moyen 11 de solidarisation dudit bras de potence 10 à un élément rigide qui peut appartenir à la machine distributrice 4, un organe 12 de maintien sur ledit bras 10 de potence du segment terminal 30 de la conduite 3 d'amenée de nourriture et un moyen moteur 13 lié au bras de potence 10 apte à déplacer à la commande l'embuc de nourrissage 2 vers le haut selon une distance prédéterminée et le maintenir en position haute au moins le temps de la distribution d'une dose. Cette disposition, en appliquant un effort de traction sur l'embuc permet d'alléger l'effort que doit produire le préposé au nourrissage sur ce dernier pendant la distribution de la dose de nourriture. Après distribution de la ration, le moyen moteur 13 est désactivé et l'effort de traction exercé sur l'embuc de nourrissage 2 annulé.

Selon une première forme de réalisation, le moyen de solidarisation 11 forme une articulation présentant un axe géométrique horizontal AA' d'articulation. Ce moyen de solidarisation comprend une platine fixée au bras de potence et une bride prévue pour être fixée à la partie rigide de la machine 4. Comme on le comprend, cette bride est articulée selon l'axe géométrique horizontal AA' à la platine. Avec une telle disposition, le moyen moteur 13, à la commande, est apte à déplacer le bras 10 en pivotement autour de l'axe géométrique horizontal AA' selon une valeur angulaire prédéterminée et dans un sens correspondant au déplacement de l'embuc 2 vers le haut.

Dans la forme préférée de réalisation, est prévu un moyen d'équilibrage du bras de potence 10, de l'embuc 2 et de la partie de conduite portée par ledit bras. Cette disposition vise à minimiser les efforts que doit produire le préposé au nourrissage, pour déplacer l'embuc, notamment de haut en bas et inversement. Ainsi les opérations d'introduction de l'embuc dans l'oesophage de l'animal et de retrait s'en trouvent grandement facilitées. La pénibilité du travail s'en trouve encore réduite par l'effort de traction vers le haut exercé sur l'embuc pendant l'opération de nourrissage.

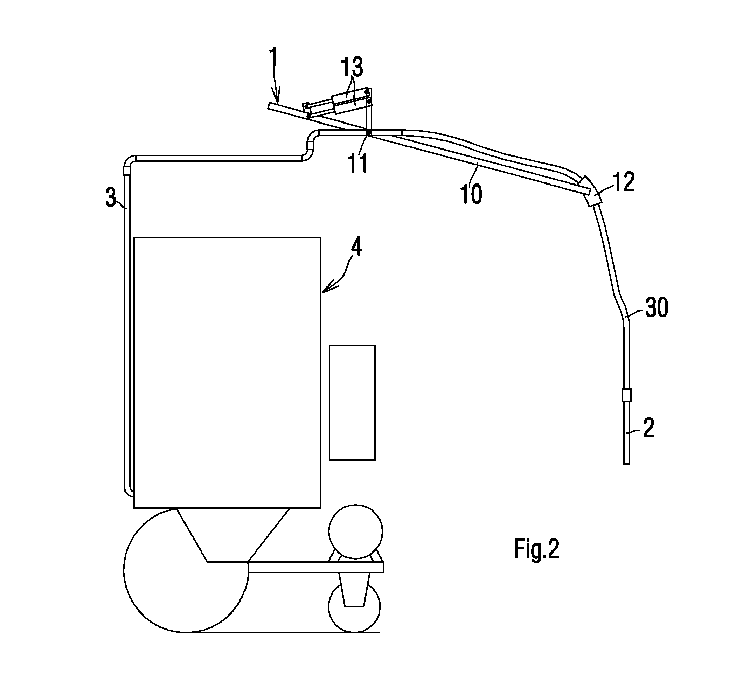

Le moyen d'équilibrage peut être constitué par le moyen moteur 13. Ainsi ce moyen moteur 13 peut exercer sur le bras 10, de manière constante lorsqu'il est actif, un couple d'équilibrage grâce auquel ce bras 10 et l'embuc 2 peuvent occuper dans l'espace une position d'équilibre. Une telle disposition dans la mesure où elle équilibre les différentes masses facilite la manipulation de l'embuc 2. En variante, le couple d'équilibrage est exercé sur le bras par un organe moteur dédié comme le montre la figure 2.

Selon la forme préférée de réalisation, l'équilibrage du bras 10 et du poids de l'embuc 2 est réalisé par une masse d'équilibrage 14 solidarisée au bras 10 par tout moyen connu. On peut remarquer sur les figures que la masse d'équilibrage 14 est solidaire de la partie distale de bras 10 alors que l'embuc 2 de nourrissage est porté par la partie proximale de ce dernier. On peut remarquer que le moyen de solidarisation 11 est situé entre les deux parties proximale et distale du bras. Avantageusement la position de la masse d'équilibrage 14 le long du bras 10 sera ajustable.

Le moyen moteur 13 peut être du type électrique et constitué par un moteur électrique comportant un arbre rotatif sur lequel un couple moteur est disponible. Dans cette forme de réalisation, l'arbre rotatif de ce moteur pourra être disposé selon l'axe AA' et pourra être en prise avec l'un des éléments platine ou bride du moyen de solidarisation, la carcasse du moteur étant alors fixée à l'autre élément de ce moyen de solidarisation.

Dans la forme préférée de réalisation, le moyen moteur 13 est constitué par un vérin articulé d'une part au bras de potence 10 et d'autre part à la bride que comporte le moyen de solidarisation 11. Dans la forme préférée de réalisation, la bride porte une patte et le vérin 13 est articulé par son corps à cette patte. La tige de ce vérin est articulée à une chape solidaire du bras 10 de potence.

Le vérin 13 peut être de tout type connu. Ainsi il peut être du type électrique, pneumatique ou hydraulique.

L'organe de maintien 12 du segment terminal souple 30 de conduite est de préférence formé par une patte formant un berceau concave dans lequel est engagé, de préférence de manière amovible, ledit segment terminal.

Dans la forme de réalisation précédemment décrite, le moyen moteur 13 agit sur le bras 10 de potence pour déplacer l'embuc 2 vers le haut. Dans une autre forme de réalisation non représentée, le moyen de solidarisation ne forme plus une articulation et le moyen moteur 13 toujours solidaire du bras de potence agit directement sur l'embuc 2 de nourrissage ou sur un élément fixé à ce dernier. Par exemple ce moyen moteur peut être constitué par un vérin solidaire par son corps du bras de potence 10. Par sa tige, ce vérin peut être solidarisé à l'embuc soit directement soit par l'entremise d'un lien souple fixé d'une part à ladite tige et d'autre part à l'embuc ou bien au segment terminal souple 30 de la conduite 3.

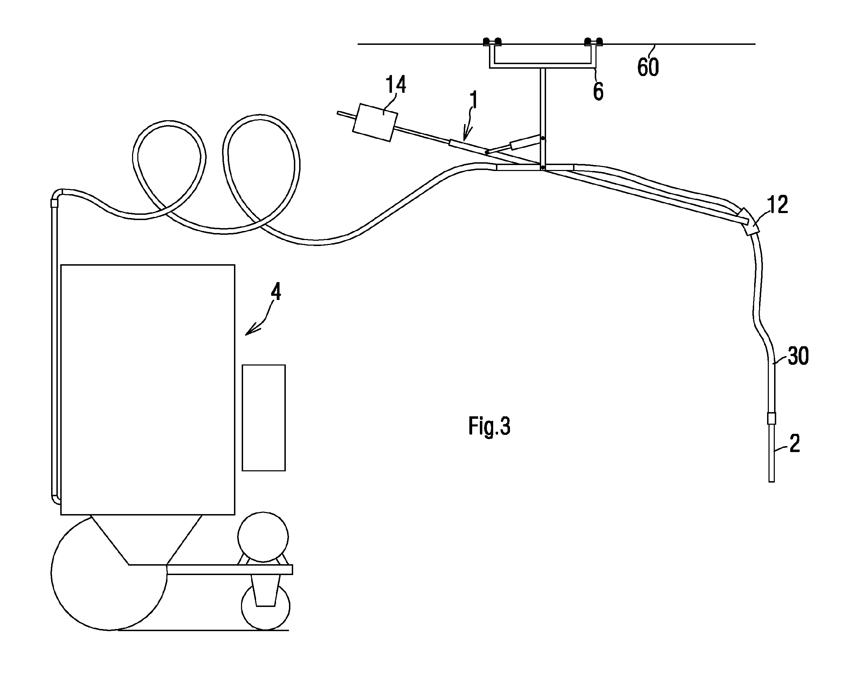

La potence telle que décrite est préférentiellement prévue pour être fixée à une partie fixe d'une machine distributrice, mais en variante comme montré en figure 3 elle pourra être fixée à un chariot suiveur 6 suspendu à un rail de guidage 60 installé au dessus des logements d'élevage.

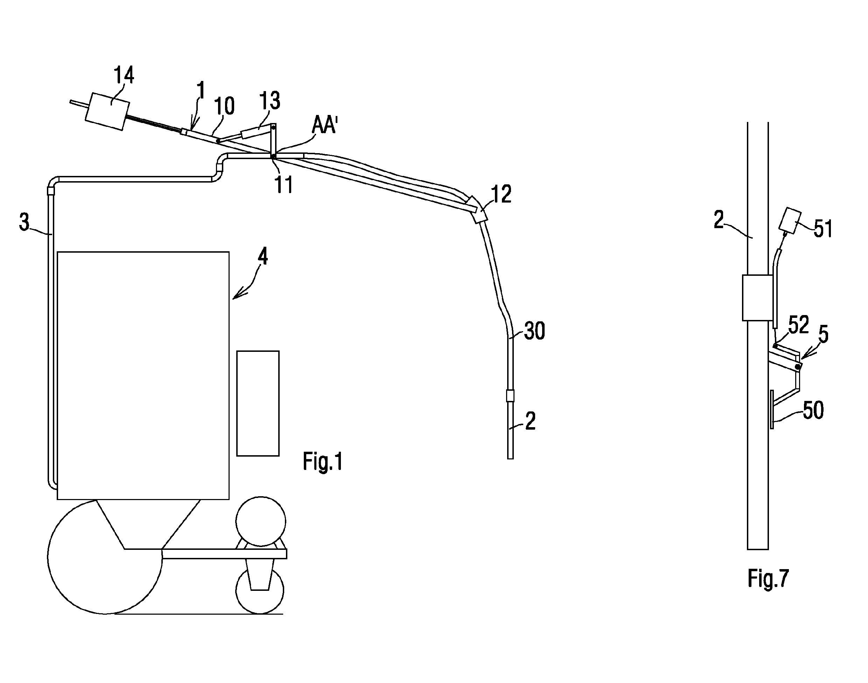

Comme le montre les figures 1 et 2 la potence 1 est installée sur une partie fixe d'une machine distributrice 4. Cette machine comporte une réserve de nourriture à distribuer en rations, une pompe distributrice de la nourriture rations par rations apte à puiser une ration de nourriture dans la réserve et la délivrer à une conduite 3 d'amenée de la nourriture à un embuc 2 de nourrissage de palmipèdes prévu pour être intubé dans le jabot du palmipède à nourrir. Cette machine comprend en outre une unité de contrôle et de commande connue en soi, contrôlant et commandant les divers équipements qu'elle comporte tels que pompe distributrice et autres et assurant le dosage des rations alimentaires distribuées aux palmipèdes.

La conduite 3 d'amenée de nourriture comportant une partie rigide de conduite et une partie souple de conduite 30 à laquelle est raccordé l'embuc 2 de nourrissage. La partie souple de conduite peut prolonger la partie rigide de conduite mais de préférence, cette partie souple de conduite est logée en partie dans la partie rigide, cette partie rigide constituant un fourreau.

Comme on peut le voir, la potence 1 est fixée à la partie rigide de la conduite 3, la bride du moyen de solidarisation 11 étant fixée à cette partie rigide.

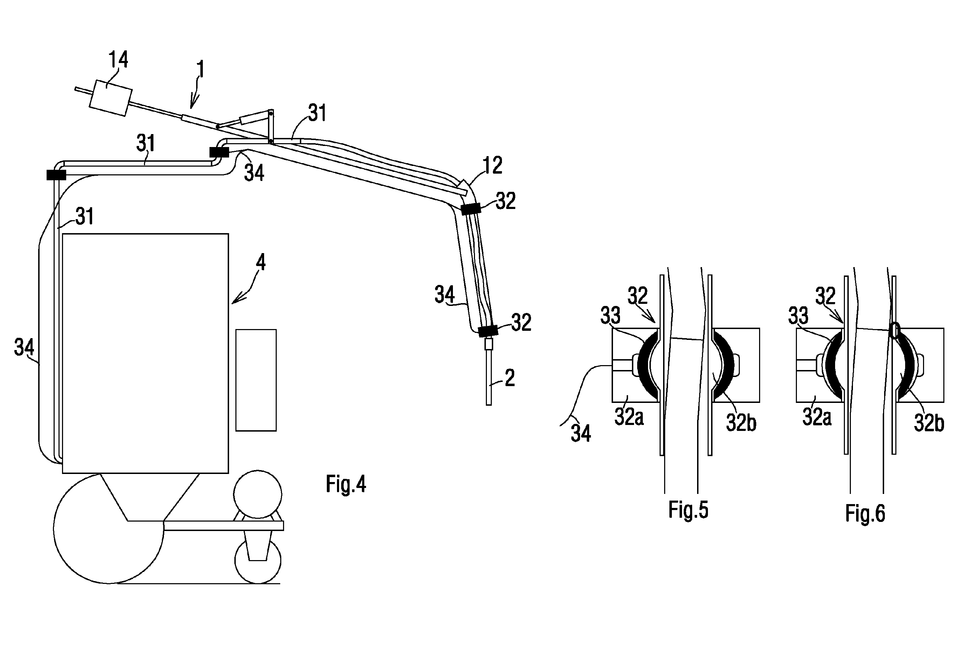

La partie rigide de conduite peut être formée comme on peut le voir représenté schématiquement en figures 4 à 6 par des tronçons de conduites 31 liés par des joints tournants 32 formant chacun une articulation selon un axe vertical. Chaque joint réuni l'un à l'autre deux tronçons rigide de conduite. Il est souhaitable que lors de l'activation de l'organe moteur 13, les articulations que forment les joints tournants 32 soient bloquées pour interdire tout mouvement des tronçons de conduites relativement les uns aux autres. Dans forme préférée de réalisation, ces joints sont auto-blocable et comprennent chacun un corps externe de joint 32a recevant en articulation un corps interne de joint 32b. Le corps externe de joint 32a est prévu pour être fixé ou formé dans l'un des tronçons de conduite 31 et le corps interne de joint 32b est prévu pour être fixé ou formé dans l'autre tronçon. Le corps externe de joint 32a comporte une chambre interne dans laquelle est engagé le corps interne de joint. Cette chambre est de plus équipée d'un moyen de blocage 33 apte, à la commande, à venir agir en contention sur le corps interne de joint pour bloquer ce dernier en position. Dans la forme préférée de réalisation, le moyen de blocage 33 est constitué par une membrane disposée de manière étanche autour du corps interne 32a et apte à venir contre ce dernier sous l'effet de la mise en pression d'un fluide introduit dans ladite chambre. Ce fluide peut être un liquide, par exemple de l'eau ou de l'huile ou bien un gaz par exemple de l'air. Les chambres internes des différents joints tournants seront connectées par des conduites 34 à un organe central de commande non représenté qui peut être une électrovanne assurant à la commande, la communication entre une source d'un fluide sous pression et les chambres internes des différents joints. Cette électrovanne sera pilotée par l'unité de contrôle et de commande que comporte la machine distributrice.

Il est bien certain que le moyen de blocage n'est pas limité à la forme de réalisation précédemment décrite. Ainsi il peut être constitué par des électroaimants, par un coupleur à poudre ou encore par moteur couple.

Le moyen de blocage que comporte chaque joint tournant sera activé simultanément à l'activation de l'organe moteur 13 ou avec un retard de quelques milli secondes.

Selon une autre forme de réalisation, la conduite peut en totalité être constituée de tronçons de conduits rigides réunis deux à deux par des joints tournants avec moyen de blocage.

Cette machine comme on peut le voir en figure 7, peut être équipée d'un dispositif de contention 5 motorisé apte à immobiliser le bec du palmipède sur l'embuc 2 de nourrissage. Avantageusement, ce dispositif de contention est monté sur l'embuc 2 de nourrissage. Ce dispositif comprend une palette 50 articulée à une chape solidaire de l'embuc, manoeuvrée en ouverture et fermeture par un organe moteur 51 et ce par l'intermédiaire d'une transmission de mouvement 52.

Dans la forme préférée de réalisation, la transmission de mouvement est constituée par une corde à piano solidaire d'une part d'un levier de manoeuvre fixé à la palette 50 et d'autre part de l'organe moteur 51, ce dernier étant de préférence constitué par un vérin fixé par son corps à l'embuc 2 ou à une poignée que comporte ce dernier. La tige de ce vérin recevra en fixation l'extrémité correspondante de la corde à piano.

Alternativement, le dispositif peut être du type de celui décrit dans le brevet FR 2 917 946.

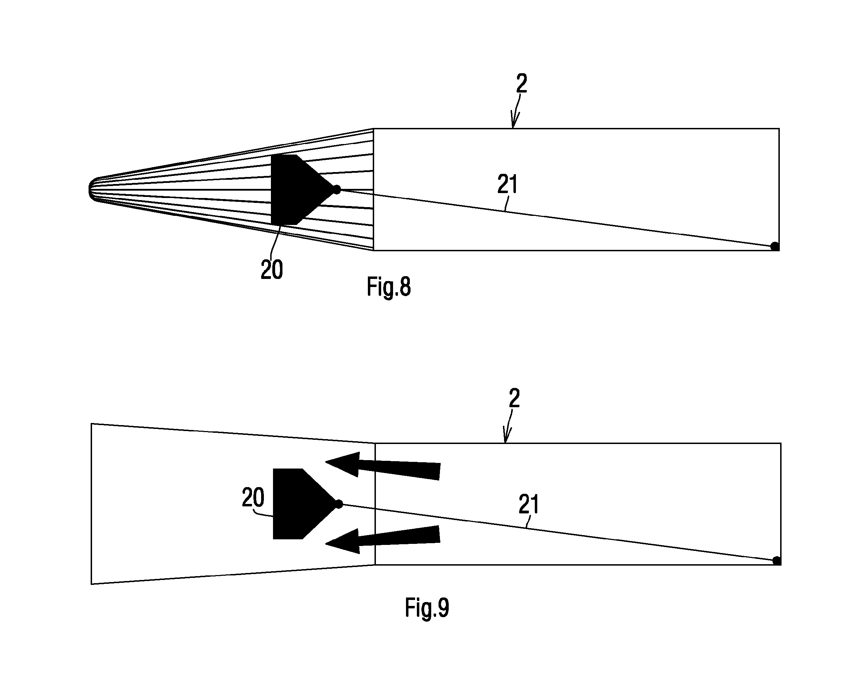

L'embuc 2 pour ce qui concerne au moins sa partie destinée à être intubé dans l'oesophage du palmipède sera avantageusement souple et élastiquement déformable. Cette disposition écarte les risques de blessures du tube digestif de l'animal. Par ailleurs, l'embuc 2 à son extrémité inférieure terminale pourra être conformé en pointe pour faciliter son introduction dans l'oesophage de l'animal. En outre, au moins cette partie terminale sera radialement déformable, de manière élastique afin de voir sa section augmentée sous l'effet du passage de la nourriture. Préférentiellement, sous l'effet de l'action du passage de la nourriture, cette partie terminale sera apte à s'ouvrir en corole et adopter ainsi une forme évasée. Cette partie terminale pourra être dotée d'un déflecteur conique 20 apte à dévier le produit vers la face interne de ladite partie afin de forcer cette dernière à s'ouvrir en corole (fig.9). Ce déflecteur conique 20 sera fixé à l'embuc par un lien 21 souple.

L'embuc de nourrissage 2 porte un bouton poussoir électrique à partir de l'action sur lequel un signal de départ de cycle de distribution d'une dose est enclenché. Ce bouton poussoir est connecté électriquement à l'unité de contrôle et de commande.

Alternativement, le bouton poussoir est remplacé par un capteur de présence du bec du palmipède.

Les moteurs 13 et 51 sont également commandés et contrôlés par l'unité de contrôle et de commande que possède la machine distributrice.

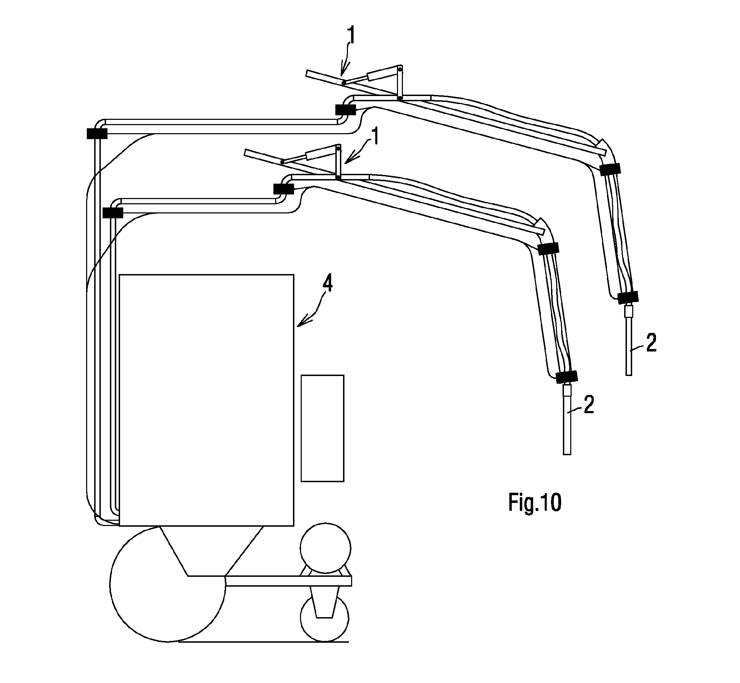

Dès l'apparition du signal de déclenchement de cycle, l'unité de contrôle et de commande active d'abord l'organe moteur 51 afin d'immobiliser le bec du palmipède sur l'embuc de nourrissage et ensuite avec un temps de retard prédéfini de quelques milli seconde, active l'organe moteur 13 afin que soit appliqué sur l'embuc un effort de traction dirigé vers le haut apte à soulager le préposé au nourrissage et le libérer. Il pourra alors, en temps masqué, pendant la distribution de la ration alimentaire au palmipède, préparer le palmipède suivant pour son nourrissage, cette préparation pouvant consister, si la machine est dotée de plusieurs embucs comme le montre la figure 10, par l'intubation d'un autre palmipède.

Après arrêt de la distribution de la ration, l'unité de contrôle et de commande désactivera les deux organes moteurs et les moyens de blocage que comportent les joints tournants.

Alternativement, l'organe moteur 13 sera désactivé avant la fin de la distribution de la ration alimentaire. Cette disposition permet d'assurer la fin de la distribution de la ration alors que l'embuc est en cours de retrait.

La machine selon l'invention pourra être dotée de moyens de déplacement autonome connus en soi. Ces moyens pourront assurer le déplacement de la machine à basse vitesse de manière continue ou bien le déplacement pas à pas de cette dernière.

Il va de soi que la présente invention peut recevoir tous aménagements et variantes du domaine des équivalents techniques sans pour autant sortir du cadre du présent brevet.

## Revendications

1. Potence de suspension d'un embuc de nourrissage de palmipède connecté au segment terminal (30) d'une conduite d'amenée de nourriture, raccordée à une machine distributrice de nourriture apte à distribuer cette nourriture doses par doses, **caractérisée en ce qu'**elle comprend un bras de potence (10), un moyen de solidarisation dudit bras (11) de potence à un élément rigide, un organe de maintien (12) sur ledit bras de potence de la conduite d'amenée (3) de nourriture et un moyen moteur (13) lié au bras de potence apte à déplacer à la commande, l'embuc de nourrissage (2) vers le haut selon une distance prédéterminée et le maintenir en position haute au moins pendant une fraction du temps nécessaire à la distribution d'une ration complète à l'embuc de nourrissage.

2. Potence de suspension selon la revendication 1, **caractérisée en ce que** :
- elle comporte un moyen d'équilibrage du bras de potence et des éléments que ce dernier porte,
- le moyen de solidarisation (11) forme une articulation présentant un axe géométrique horizontal d'articulation (AA'),
- le moyen de solidarisation (11) comprend une platine fixée au bras de potence et une bride prévue pour être fixée à la partie rigide de la machine, ladite bride étant articulée selon l'axe géométrique horizontal (AA') à ladite platine,
- le moyen moteur (13) est apte à la commande à déplacer le bras (10) en pivotement autour de l'axe géométrique horizontal (AA') selon une valeur angulaire prédéterminée et dans un sens correspondant au déplacement de l'embuc (2) vers le haut.

3. Potence de suspension selon la revendication 2, **caractérisée en ce que** le moyen moteur (13) exerce sur le bras un couple d'équilibrage.

4. Potence de suspension selon la revendication 2, **caractérisée en ce que** le bras de suspension comprend une masse d'équilibrage (14).

5. Potence de suspension selon l'une quelconque des revendications précédentes, **caractérisée en ce que** le moyen moteur est constitué par un vérin, articulé d'une part au bras de potence et d'autre part à la bride que comporte le moyen de solidarisation (11).

6. Potence de suspension selon l'une quelconque des revendications précédentes, **caractérisée en ce que** l'organe de maintien (12) est constitué par une patte formant un berceau concave dans lequel est engagé le segment terminal souple de la conduite d'amenée de nourriture.

7. Potence de suspension selon l'une quelconque des revendications précédentes, **caractérisé en ce que** la partie rigide à laquelle est solidarisée est un chariot suiveur (6) monté sur rails de guidage (60).

8. Machine distributrice (4) de rations alimentaires à des palmipèdes comportant une réserve de nourriture à distribuer en doses, une pompe distributrice de la nourriture doses par doses apte à puiser une dose de nourriture dans la réserve et la délivrer à une conduite (3) d'amenée de la nourriture à un embuc (2) de nourrissage de palmipèdes prévu pour être intubé dans le jabot du palmipède à nourrir, ladite machine comportant de plus une unité de contrôle et de commande contrôlant et commandant les divers équipements de la machine, et la conduite d'amenée de nourriture (3) comportant une partie rigide de conduite, **caractérisée en ce qu'**elle comporte une potence (1) selon l'une quelconque des revendications 1 à 6.

9. Machine distributrice (4) selon la revendication précédente, **caractérisée en ce que** la partie rigide à laquelle est solidarisée la potence (1) est constituée par la partie rigide de conduite que comporte la machine.

10. Machine distributrice selon la revendication 8 ou la revendication 9, **caractérisée en ce que** la partie rigide de conduite est formée par des tronçons de conduites (31) liés par des joints tournants (32) formant chacun une articulation selon un axe vertical, chaque joint tournant étant auto-blocable et comportant un moyen de blocage activable par l'unité de contrôle et de commande.

11. Machine distributrice selon l'une quelconque des revendications 8 à 10, **caractérisée en ce que** la partie rigide de conduite est prolongée par une partie souple de conduite (30) à laquelle se raccorde l'embuc (2) de nourrissage.

12. Machine distributrice selon l'une quelconque des revendications 8 à 10, **caractérisé en ce que** l'embuc de nourrissage (2) est raccordé à la partie rigide de conduite.

13. Machine distributrice selon l'une quelconque des revendications 8 à 12, **caractérisée en ce qu'**elle comporte un dispositif de contention (5) avec moteur 51 d'actionnement d'une palette (50) apte à immobiliser le bec du palmipède sur l'embuc de nourrissage (2).

14. Machine distributrice selon la revendication précédente, **caractérisée en ce que** le dispositif de contention (5) est monté sur l'embuc de nourrissage.

15. Machine distributrice selon l'une quelconque des revendications 8 à 14, **caractérisée en ce que** l'embuc (2) pour ce qui concerne au moins sa partie destinée à être intubé dans l'oesophage du palmipède est souple et élastiquement déformable.

16. Machine distributrice selon la revendication précédente, **caractérisée en ce que** l'embuc à son extrémité inférieure terminale est conformé en pointe pour faciliter son introduction dans l'oesophage de l'animal et que cette partie terminale est radialement déformable de manière élastique de façon à s'ouvrir en corole sous l'effet de l'action du passage de la nourriture, ladite partie étant dotée d'un déflecteur (20) apte à faciliter cette ouverture.

17. Machine selon l'une quelconque des revendications 8 à 18, **caractérisée en ce que** dès le déclenchement d'un cycle de distribution d'une ration alimentaire, l'organe moteur (51) du moyen de contention est activé avant activation de l'organe moteur (13), le délai entre les deux activations étant inférieur à la seconde.
